(19) **Europäisches Patentamt / European Patent Office / Office européen des brevets**

(11) **EP 1 583 217 B1**

(12) **EUROPEAN PATENT SPECIFICATION**

(45) Date of publication and mention
of the grant of the patent:
**08.12.2010 Bulletin 2010/49**

(21) Application number: **03778837.9**

(22) Date of filing: **11.12.2003**

(51) Int Cl.:
**H02P 6/16** *(2006.01)*     **H02P 21/00** *(2006.01)*

(86) International application number:
**PCT/JP2003/015900**

(87) International publication number:
**WO 2004/054086 (24.06.2004 Gazette 2004/26)**

(54) **MOTOR DRIVE-CONTROLLING DEVICE AND ELECTRIC POWER-STEERING DEVICE**

ANTRIEBSSTEUERUNG UND ELEKTRISCHE SERVOLENKUNG

DISPOSITIF DE COMMANDE D'ENTRAINEMENT MOTEUR ET DISPOSITIF DE SERVO-DIRECTION ELECTRIQUE

(84) Designated Contracting States:
**AT BE BG CH CY CZ DE DK EE ES FI FR GB GR HU IE IT LI LU MC NL PT RO SE SI SK TR**

(30) Priority: **12.12.2002 JP 2002360426**
**24.01.2003 JP 2003015740**

(43) Date of publication of application:
**05.10.2005 Bulletin 2005/40**

(73) Proprietors:
- **NSK Ltd.**
  **Tokyo 141-8560 (JP)**
- **NSK Steering Systems Co., Ltd.**
  **Shinagawa-ku,**
  **Tokyo 141-8560 (JP)**

(72) Inventors:
- **TA,CaoMinh**
  **c/o NSK STEERING SYSTEMS CO., LTD.**
  **Maebashi-Shi, Gunma 371-8527 (JP)**
- **JIANG, ChunHao**
  **c/o NSK STEERING SYSTEMS CO., LTD**
  **Maebashi-Shi, Gunma 371-8527 (JP)**
- **ENDO, Shuji**
  **c/o NSK STEERING SYSTEMS CO., LTD.**
  **Maebashi-Shi, Gunma 371-8527 (JP)**

(74) Representative: **Klunker . Schmitt-Nilson . Hirsch**
**Patentanwälte**
**Destouchesstrasse 68**
**80796 München (DE)**

(56) References cited:
**JP-A- 2000 217 393**    **JP-A- 2001 018 822**
**US-A- 5 850 130**    **US-A- 6 041 625**
**US-A- 6 081 087**    **US-A1- 2002 109 479**
**US-B1- 6 427 104**

- **PATENT ABSTRACTS OF JAPAN vol. 2000, no. 16, 8 May 2001 (2001-05-08) & JP 2001 018822 A (TOYOTA MOTOR CORP), 23 January 2001 (2001-01-23)**
- **PATENT ABSTRACTS OF JAPAN vol. 2000, no. 24, 11 May 2001 (2001-05-11) & JP 2001 187578 A (KOYO SEIKO CO LTD), 10 July 2001 (2001-07-10)**
- **PATENT ABSTRACTS OF JAPAN vol. 2003, no. 01, 14 January 2003 (2003-01-14) & JP 2002 272163 A (FUJI ELECTRIC CO LTD), 20 September 2002 (2002-09-20)**
- **PATENT ABSTRACTS OF JAPAN vol. 2000, no. 11, 3 January 2001 (2001-01-03) & JP 2000 217393 A (FUJI ELECTRIC CO LTD), 4 August 2000 (2000-08-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

BACKGROUND OF THE INVENTION

1. Technical Field

The present invention relates to an improvement of a motor drive control apparatus, which can be used for an electric power steering apparatus most suitably, and to an electric power steering apparatus using the motor drive control apparatus.

2. Prior Art

Conventionally, as a drive control method of a motor used for an electric power steering apparatus, e.g., as a drive control method of a motor, there is employed a vector control method in which rotation magnetic field is generated from a controller through an inverter based on a rotation position of a rotor, and rotation of the motor is controlled. That is, according to this vector control method, a plurality of exciting coils are disposed on an outer peripheral surface of the rotor through predetermined angles from one another, and the excitation of the exciting coils is switched in succession by a control circuit in accordance with the position of the rotor, thereby controlling the rotation of the rotor.

The vector control method of this kind is disclosed in Japanese Patent Application Laid-open (JP-A) No.2001-18822. In the electric power steering apparatus of JP-A-No. 2001-18822, a brushless motor is controlled in accordance with a steering torque detected by a steering torque sensor. A sensitive region determination part determines whether or not a running condition of a vehicle belongs to a sensitive region (a region in which the running condition is high speed running and in a low steering speed time, and a driver feels a steering feeling sensitively) based on a vehicle speed and steering speed. Based on the determination result, a modification of a control mode of the brushless motor, such as, the change of a control gain, or the changing over a presence or an absence of correction by a non-interacting control correction value or a pulsation torque correction value, is carried out.

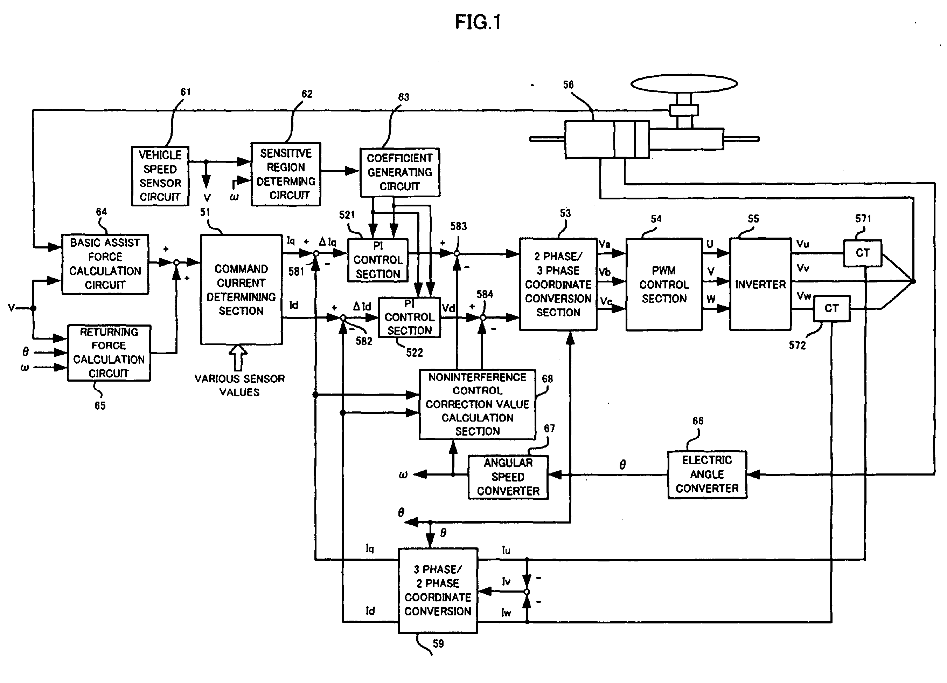

Fig. 1 is a block diagram showing one example of control of a motor 56 according to the vector control method.

In Fig. 1, a main path of a command signal is formed from a command current determining section 51 which determines a control command value of the motor 56 to the motor 56 through PI control sections 521 and 522, a 2 phase/ 3 phase coordinate conversion section 53, a PWM control section 54 and an inverter 55. Current sensors 571 and 572 are disposed between the inverter 55 and the motor 56. Motor current detected by the current sensors 571 and 572 is converted into 2 phase by a 3 phase/2 phase coordinate conversion section 59. A feedback path which feeds back 2 phase current component Iq and Id to subtracters 581 and 582 disposed between the command current determining section 51 and the PI control section 52 is formed.

With this control system, in the command current determining section 51, torque command value Tref detected by a torque sensor, a rotation angle θ of the rotor detected by a position detection sensor 11 and electric angle speed m are received, and current command values Idref and Iqref are determined. These current command values Idref and Iqref are corrected by feedback current which is converted into a 2 phase current components Id and Iq converted into 2 phase by the 3 phase/2 phase coordinate conversion section 59 of the feedback path. That is, errors between the 2 phase current components Id and Iq and the current command values Idref and Iqref are calculated by the subtracters 581 and 582. Then, a signal indicative of duty of PWM control is calculated as Vd and Vq in a form of d and q components by the PI control sections 521 and 522, and the signal is reversely converted into phase components Va, Vb and Vc from the d and q components by the 2 phase/3 phase coordinate conversion section 53. The inverter 55 is PWM controlled based on the 3 phase components Va, Vb and Vc, inverter current is supplied to the motor 56, and rotation of the motor 56 is controlled.

A reference symbol 61 represents a vehicle speed sensor circuit, a reference symbol 62 represents a sensitive region determining circuit, a reference symbol 63 represents a coefficient generating circuit, a reference symbol 64 represents a basic assist force calculation circuit, a reference symbol 65 represents a returning force calculation circuit, a reference symbol 66 represents an electric angle converter, a reference symbol 67 represents an angular speed converter, and reference symbol 68 represents a noninterference control correction value calculation section.

In the case of the above vector control, the current command values Idref and Iqref are determined based on the torque command value Tref, the electric angular speed ω and the rotation angle θ. Moreover, feedback currents Iu, Iv, Iw of the motor 56 are converted into Id and Iq and then, error between the 2 phase current components Id and Iq and the current command values Idref and Iqref is calculated, the error executes current control by PI control, thereby obtaining command values Vd and Vq to the inverter. And then, the command values Vd and Vq are again reversely inverted into the command values Va, Vb, Vc of 3 phase by the 2 phase/3 phase coordinate conversion section 53, the inverter 55 is controlled and the rotation of the motor 56 is controlled.

A permanent magnet synchronous motor (PMSM) is a motor commonly used for the electric power steering apparatus. The permanent magnet synchronous motor is driven by 3 phase sine wave current. A control method called vector control is widely used as a control method for driving a motor. However, it is strongly desired to make the electric power steering apparatus compact, and there is a tendency that a brushless DC motor is used as a motor suitable for miniaturization.

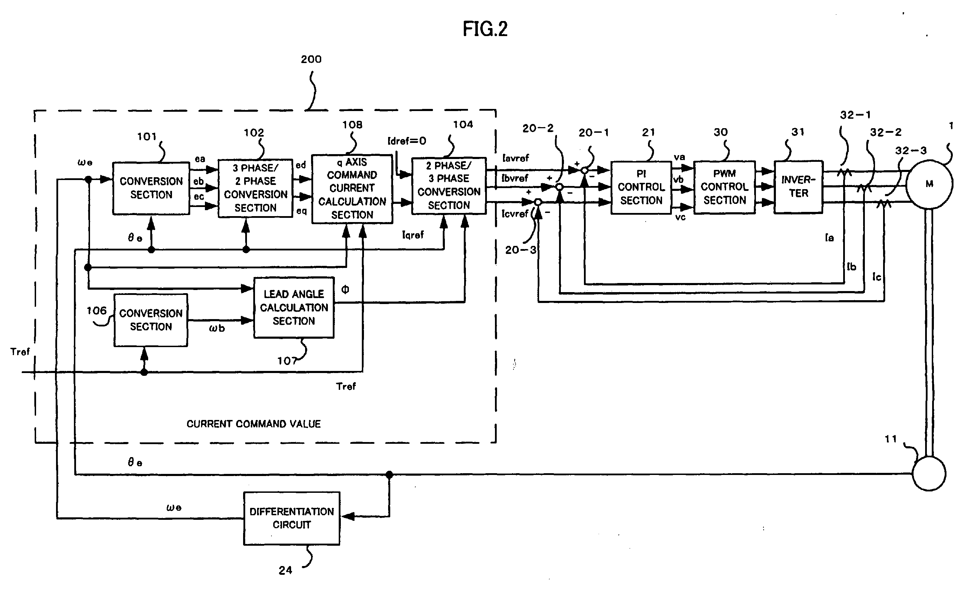

A motor drive control apparatus using the vector control method for a motor of the conventional electric power steering apparatus under such circumstances will be explained using Fig. 2.

A current command value section 200 controls current of the motor 1. A main path reaching a motor 1 is connected to a rear portion of the current command value section 200 through subtracters 20-1, 20-2, 20-3 which detect errors between command values Iavref, Ibvref, Icvref and motor currents Ia, Ib, Ic; a PI control section 21 which inputs error signals from the subtracters 20-1, 20-2, 20-3, a PWM control section 30 which inputs 3 phase command values Va, Vb, Vc from the PI control section 21, and an inverter 31 which converts DC to AC. Current detection paths 32-1, 32-2, 32-3 which detect motor currents Ia, Ib, Ic are disposed between the inverter 31 and the motor 1. Detected motor current is fed back to the subtracters 20-1, 20-2, 20-3.

Next, a vector current command value calculation section 100 will be explained. First, concerning its input, a command value Tref calculated from torque detected by a torque sensor (not shown), a rotation angle $\theta e$ of the rotor indicative of rotor position of the motor detected by the position detection sensor 11, and an electric angular speed $\omega e$ calculated by a differentiation circuit 24 are input. Here, a mechanical angular speed $\omega m$ of the motor and an electric angular speed $\omega e$ are in a relation of $\omega m = we/P$, wherein P represents an polar logarithm of the motor 1. Thus, in this case, the angular speed detection circuit comprises the position detection sensor 11 and the differentiation circuit 24. If the electric angular speed $\omega e$ and the rotation angle $\theta e$ of the rotor are input, the counter voltages ea, eb, ec are calculated by the conversion section 101. Next, the 3 phase/2 phase conversion section 102 converts the same into ed, eq, which are d axis, q axis components, and d axis component voltage ed, q axis component voltage eq are input, and the current command value Iqref of the q axis is calculated by the q axis command current calculation section 108. In this case, it is calculated as current command value Idref = 0 of d axis. That is, in an output equation of the motor,

$$\texttt{Tref} \times \omega\texttt{m} = 3/2 \ (\texttt{ed} \times \texttt{Id} + \texttt{eq} \times \texttt{Iq}) \ ... \ (1)$$

If Id = Idref = 0 is input,
it is calculated as

$$\texttt{Iq} = \texttt{Iqref} = 2/3 \ (\texttt{Tref} \times \omega\texttt{m} \ / \ \texttt{eq}) \ ... \ (2)$$

The command values Iavref , Ibvref, Icvref are calculated based on a current command value Iqref from the current command value Iqref from the q axis command current calculation section 108 and lead angle $\Phi$ of later-described lead angle control. That is, the q axis command current calculation section 108 inputs the angle $\Phi$ and Iqref calculated by the lead angle calculation section 107, and the 2 phase /3 phase conversion section 104 calculates the command values Iavref, Ibvref, Icvref.

Functions such as $\Phi$ = acos ($\omega b/\omega m$) and $\Phi$ = K(1-($\omega b/\omega m$) are empirically used ("acos" means $\cos^{-1}$).

A base angular speed $\omega b$ of the motor means a limit angular speed of the motor when the motor is driven without using field-weakening control.

For the motor drive apparatus using the vector control as shown in Fig. 1, it is necessary to use a resolver or an encoder as the position detection sensor 11 to precisely detect the motor position also when the motor 1 is rotated at low speed as described in JP-A No. 2001-187578. If the vector control is carried out in a state in which the motor position is not precisely detected, torque ripple of the motor is increased and there is inconvenience that a driver has a sense of incongruity such as vibration of steering operation of a steering wheel as the electric power steering apparatus. In other words, in order to control the motor using the vector control, it is necessary to detect the motor position precisely, but since the resolver or encoder is expensive, the electric power steering apparatus cannot be produced inexpensively.

The start of field weakening control by lead angle control is determined such that if the angular speed $\omega m$ of the motor which is detected speed of the motor 1 becomes greater than the base angular speed $\omega b$ utilizing the above-described $\Phi$ = acos ($\omega b/\omega m$), the execution of the lead angle control is started. However, the detection error of the resolver or encoder, which is one example of the position detection sensor of the rotor is included in the angular speed $\omega m$ detected here. Further, recently, a position detection sensor using a hole sensor is used to inexpensively detect the position of the rotor, and the possibility that greater error as that of the resolver is included is increased.

As a result, there is a case in which the field weakening control is not carried out due to detection error of the position detection sensor of the rotor or a calculation error generated during the control processing of the motor drive control apparatus although it is necessary to carry out the field weakening control. For this reason, the motor terminal voltage becomes saturated at the time of high speed rotation, the motor current cannot follow the current command value, the torque ripple is increased or motor noise is increased, and as the electric power steering apparatus, this is not preferable because a driver feels abnormal vibration through a steering wheel at the time of abrupt steering wheel operation, or motor noise is generated to annoy the driver.

If the hole sensor which is less expensive than the resolver or encoder is used for detecting the position of the rotor, the angular speed ωm of the motor or the rotation angle θe of the rotor cannot be detected precisely when the rotation speed of the rotor is reduced. Thus, there is a problem that vector control having small torque ripple cannot be used.

The present invention has been accomplished in view of the circumstances, and it is an object of the invention to provide a motor drive control apparatus capable of utilizing the vector control which is excellent as a motor control although a motor position-estimating circuit comprising an inexpensive position detection sensor is used, and to provide an electric power steering apparatus which does not exert a sense of incongruity for steering wheel operation irrespective of normal steering operation or abrupt steering operation at the time of emergency, and which does not generate high motor noise.

It is another object of the invention to provide a motor drive control apparatus and an electric power steering apparatus in which even if there is a detection error of a position detection sensor of a rotor or a control calculation error of a motor drive control apparatus, the control is switched to a field weakening control before a motor terminal voltage becomes saturated at the time of high speed rotation of a motor and as a result, torque ripple is small, motor noise is also small, and also when the steering wheel is abruptly operated, noise is small, and the steering wheel operation can smoothly follow. It is also an object of the invention to provide a motor drive control apparatus and an electric power steering apparatus capable of controlling vector of a brushless DC motor even if a hole sensor is used to detect a position of the rotor.

SUMMARY OF THE INVENTION

The present invention relates to a motor drive control apparatus of a motor having three or more phases, and the above object of the invention is achieved by the motor drive control apparatus comprising a motor position-estimating circuit for calculating rotation speed of the motor and rotor position of the motor, a vector control section for vector controlling based on rotation speed and the rotor position of the motor calculated by the motor position-estimating circuit, a rectangular wave control section for rectangular wave controlling the motor, a switch for switching between two control sections, and a level detector having a set rotation speed N which is a determination reference of the switching of the switch, wherein control is performed by switching the switch such that when the rotation speed of the motor calculated by the motor position-estimating circuit is faster than the set rotation speed N, the vector control section controls, and when the rotation speed is slower than the set rotation speed N, the rectangular wave control section controls.

Further, the above object can effectively achieved by the feature that the level detector comprises set rotation speeds N1 and N2 (wherein, N1>N2) having different set rotation speeds, the motor drive control apparatus has such hysteresis characteristics that the rotation speed of the motor exceeds the set rotation speed N1 during rising process and is high speed, the switch is switched such that control is carried out by the vector control section from the rectangular wave control section, and when the rotation speed of the motor is slower than the set rotation speed N2 during the lowering process and is low speed, the switch is switched such that the control is carried out by the rectangular wave control section.

Further, the above object can effectively achieved by the feature that the motor position-estimating circuit comprises at least a hole sensor, or the motor is a brushless DC motor, or current of the motor is rectangular wave current, or an electric power steering apparatus using the motor drive control apparatus.

Further, above object of the invention is achieved by a motor drive control apparatus comprising a d axis command current calculation section for calculating a d axis current command value Idref for vector controlling the motor, a q axis command current calculation section for calculating a q axis current command value Iqref, and an angular speed detection circuit for detecting at least mechanical angular speed ωm of the motor, wherein when the mechanical angular speed ωm is faster than angular speed (α×ωb) obtained by multiplying base angular speed ωb of the motor by α (0<α<1), the d axis current command value Idref is obtained from torque command value Tref of the motor, the angular speed (α×ωb) and the mechanical angular speed ωm.

Further, above object of the invention is achieved by the feature that when the angular speed detection circuit comprises a hole sensor as a constituent element, the motor drive control apparatus comprises an angular speed detection circuit for calculating mechanical angular speed ωm of the motor and a position of a rotor of the motor, a vector control section for vector controlling based on angular speed ωm of the motor and the rotor position calculated by the angular speed detection circuit, a rectangular wave control section for rectangular wave controlling the motor, a switch for switching the two control sections, and a level detector having set angular speed which becomes determination reference of the switching of the switch, and control is performed by switching the switch such that when the mechanical angular speed $\omega$m calculated by the angular speed detection circuit is faster than the set angular speed , the vector control section controls, and when the mechanical angular speed $\omega$m is slower than the set angular speed, the rectangular wave control section controls.

Further, the above object can effectively achieved by the feature that the motor is a brushless DC motor having three or more phases, or current waveform or counter voltage waveform of the brushless DC motor is rectangular wave or pseudo rectangular wave, or an electric power steering apparatus using the motor drive control apparatus.

Brief Description of the Drawings

Fig. 1 is a control block diagram using a conventional resolver and the like;

Fig. 2 is a control block diagram using a conventional field weakening control;

Fig. 3 is a sectional view of a structure showing one example of a brushless DC motor, which is to be controlled in the invention;

Fig. 4 is a block diagram showing one example of a control system in which control method is switched depending upon rotation speed of a motor of the invention;

Fig. 5 is a block diagram showing one example of calculation of a current command value of the invention;

Fig. 6 is a block diagram showing another embodiment of the control system in which a control method is switched in accordance with rotation speed of the motor of the invention;

Fig. 7 is a block diagram showing one example of the control system, which is switched with hysteresis characteristics in accordance with rotation speed of the motor of the invention;

Fig. 8 is a diagram showing a principle of position detection of the rotor of the brushless DC motor;

Figs. 9 are diagrams showing one example of current waveform and counter voltage waveform which energize a rectangular wave motor to which the present invention is applied;

Fig. 10 is a block diagram showing one example of a control system to which the field weakening control of the invention is applied;

Fig. 11 is a block diagram showing one example of d axis current calculation for the field weakening control of the invention;

Fig. 12 is a diagram showing one example of the effect of the field weakening control of the invention;

Fig. 13 is a block diagram showing one example of combination of the field weakening control and a control system in which the control method is switched in accordance with the rotation speed of the motor of the invention; and

Fig. 14 is a diagram showing one example of the effect of a combination of the field weakening control and the switching of the control method.

DETAILED DESCRIPTION OF PREFERRED EMBODIMENTS

An embodiment of a first invention will be explained with reference to the drawings.

This embodiment will be explained based on a case in which the present invention is applied to a 3 phase brushless DC motor, but the invention is not limited to this, and the invention can also be applied to other motors similarly.

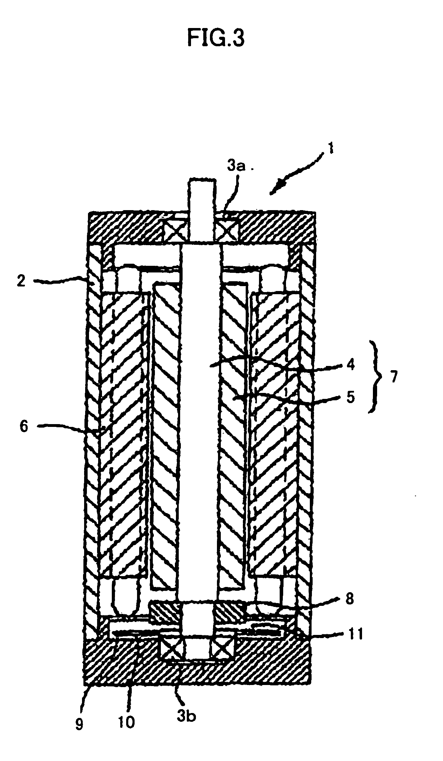

In Fig. 3, a 3 phase brushless DC motor 1 of the embodiment of the invention includes a cylindrical housing 2, a rotation shaft 4 which is disposed along an axis of the housing 2 and which is rotatably supported by bearings 3a and 3b, a motor driving permanent magnet 5 fixed to the rotation shaft 4, and a stator 6 which is fixed to an inner peripheral surface of the housing 2 such as to surround the permanent magnet 5 and around which 3 phase exciting coils are wound. The rotation shaft 4 and the permanent magnet 5 constitute a rotor 7 (hereinafter, simply referred to as a rotor). Phase detecting hole sensors are disposed in the vicinity of one end of the rotation shaft 4 of the rotor 7.

The motor 1 is controlled using rectangular wave current (or trapezoidal wave current). Here, The motor is controlled by the rectangular wave current because if a current peak value is the same as compared with sine wave current, the rectangular wave current has greater effective value and thus greater output value (power) can be obtained. As a result, when a motor having the same performance is to be produced, there is a merit that the motor can be made compact if the rectangular wave is used as a control signal. On the other hand, control using the rectangular wave current has a drawback that it is difficult to reduce torque ripple as compared with control using the sine wave current.

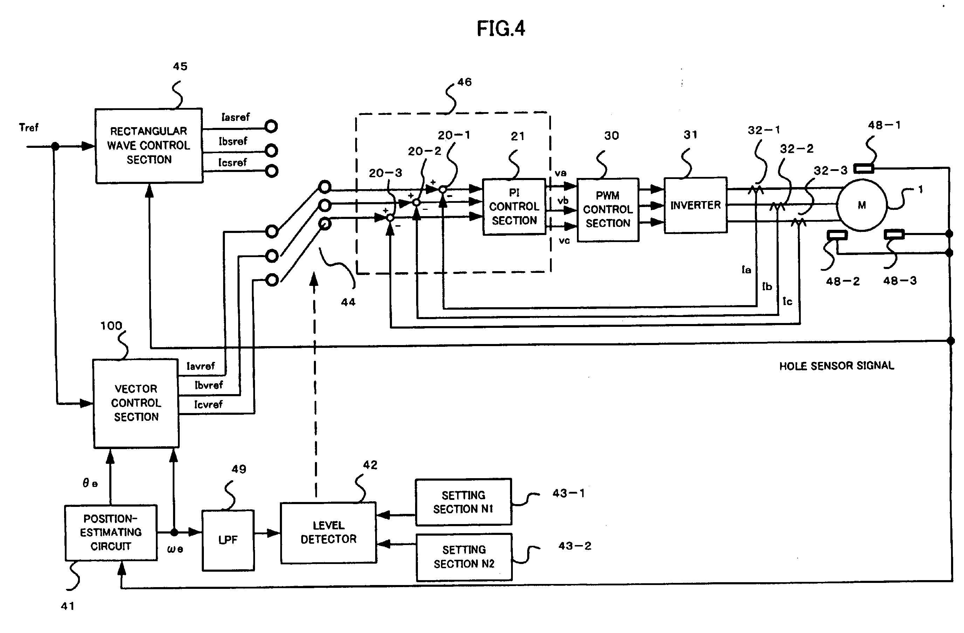

In the following, an embodiment of the present invention for solving the above-described problem under such circumstances will be explained using Fig. 4.

Points of the present invention will be described. One point is that inexpensive hole sensors having extremely low resolving power as compared with an encoder or resolver are used, and the number of hole sensors is also small.

Another point is that when the number of revolutions of the motor is high, a position of the rotor can be estimated relatively precisely even with a motor position-estimating circuit comprising the hole sensor and thus, the vector control is used, and when the number of revolutions is reduced and signals per time obtained by the hole sensor is reduced and an error of position estimation is increased, the control mode is switched to a rectangular wave control such as 120 degrees conductive control for example which does not require position estimation of the motor.

First, a structure of the embodiment of the invention will be explained using Fig. 4. In Fig. 4, the three hole sensors 48-1, 48-2, 48-3 are disposed in the motor 1. Hole signals from the hole sensors are input to a position-estimating circuit 41. The hole sensors 48-1, 48-2, 48-3 and the position-estimating circuit 41 constitute a motor position-estimating circuit. Various motor position-estimating circuits have been proposed conventionally, and JP-A No. 2002-272163 and the like describe the motor position-estimating circuits. A later-described switching rotation speed of the motor 1 is determined by the performance of the motor position-estimating circuit. Next, electric angular speed ωe of the motor 1 as rotation speed of the motor which is an output signal from the position-estimating circuit 41, and a rotation angle θe of the rotor 7 as a rotor position are input to the vector control section 100. Moreover, the electric angular speed ωe of the motor 1 is input to a level detector 42 through a low pass filter (LPF, hereinafter) 49. A signal of a setting section 43 indicative of set rotation speed N, which is a detection reference is also input to the level detector 42.

It should be noted that signals from the hole sensors 48-1, 48-2, 48-3 are directly input to a rectangular wave control section 45, and the output of the position-estimating circuit 41 is not used. In other words, even if the rotation speed of the motor 1 is reduced and an output error of the position-estimating circuit 41 is increased, the rectangular wave control section 45 is not affected.

On the other hand, in addition to the vector control section 100, the rectangular wave control section 45 is disposed as a circuit, which calculates current command values Iaref, Ibref, Icref, which control the motor 1. A switch 44 is disposed for selecting current command values Iavref, Ibvref, Icvref calculated by the vector control section 100 by a switching signal of the level detector 42, and current command values Iasref, Ibsref, Icsref calculated by the rectangular wave control section 45. Output of the switch 44 is input to the current control section 46. Output of the current control section 46 becomes input of a PWM control section 30, and the inverter 31 is disposed behind the PWM control section 30, and the motor 1 is disposed behind the inverter 31. The current detection circuits 32-1, 32-2, 32-3 are disposed between the motor 1 and the inverter 31 to detect motor currents Ia, Ib, Ic, and is feedback controlled by the current control section 46.

Internal structures of the rectangular wave control section 45 and the vector control section 100 will be explained. The rectangular wave control section 45 is well known and is described in JP-A No. 2002 369569. As a feature of the rectangular wave control, the hole sensor signal is used and the position estimation of the rotor is not required. Thus, even if the position estimation error by the hole sensor is increased, rectangular wave control is not hindered.

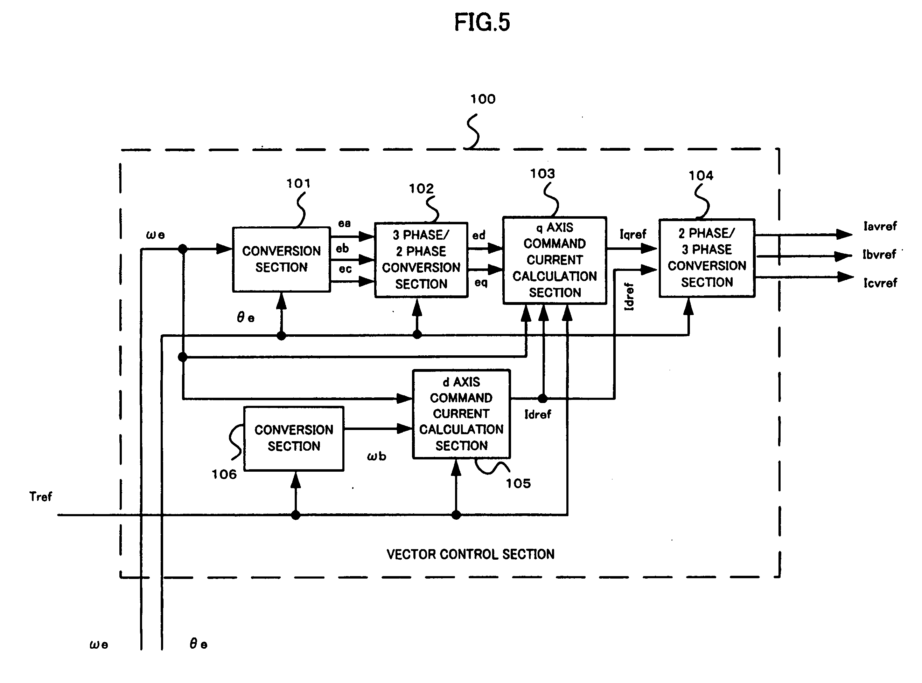

The vector control section used here is vector control having excellent torque ripple control when the brushless DC motor is controlled by rectangular wave and thus, the vector control section will be explained in detail using Fig. 5.

In the vector control section 100, current command values Idref and Iqref of vector control d and q components are determined utilizing characteristics of excellent vector control and then, the current command values Idref and Iqref are converted into phase current command values Iaref , Ibref, Icref, and all of phase controls instead of d, q control are closed by the feedback control section. Thus, in the stage for calculating the current command values Iaref , Ibref, Icref, the theory of the vector control is utilized and thus, this control method is called pseudo vector control (PVC control, hereinafter).

As shown in Fig. 4 , the motor drive control apparatus using this PVC control includes the subtracters 20-1, 20-2, 20-3 which obtain phase current errors based on the command values Iavref , Ibvref, Icvref from the vector control section and the motor currents Ia, Ib, Ic. The motor drive control apparatus also includes a PI control section 21 which carried out proportional integral control. The phase command current is supplied from the inverter 31 to the motor 1 by the PWM control of the PWM control section 30, and the rotation of the motor 1 is controlled.

The current control section 46 includes the subtracters 20-1, 20-2, 20-3 which obtain the phase current errors from the phase current command value Iavref, Ibvref, Icvref of the motor and the motor phase currents Ia, Ib, Ic. The current control section 46 also includes the PI control section 21, which uses the phase current error as input. The current detection circuits 32-1, 32-2, 32-3 are disposed as the motor current detection circuit between the inverter 31 and the motor 1, and a feedback control which inputs the motor phase currents Ia, Ib, Ic detected by the current detection circuits 32-1, 32-2, 32-3 to the subtracters 20-1, 20-2, 20-3 is formed.

In Fig.5, the vector control section 100 includes a conversion section 101 as the phase counter voltage calculation section, the 3 phase/2 phase conversion section 102 as the d, q voltage calculation section, a q axis command current calculation section 103 for calculating q axis current command value Iqref, a 2 phase /3 phase conversion section 104 as a phase current command calculation section, a d axis command current calculation section 105 for calculating d axis current command value Idref, and the conversion section 106 for converting base angular speed ωb of the motor from the torque command value Tref. The vector control section 100 receives a rotor position detection signal comprising rotation angle θe and the electric angular speed ωe of the rotor 7 calculated by the position-estimating circuit 41, and the torque command value Tref determined based on torque detected by the torque sensor (not shown), and current command values Iaref , Ibref, Icref of phases calculated by the vector control are output.

The rotation of the motor 1 is controlled by the control block structure in the following manner.

First, the vector control section 100 receives rotation angle θe and electric angular speed ωe of the rotor obtained by the position-estimating circuit 41, and calculates counter voltages ea, eb, ec of the phases based on a conversion table of the conversion section 101. Next, the counter voltages ea, eb, ec are converted into counter voltages ed, eq of d, q components based on equations (3) and (4) by the 3 phase/2 phase conversion section 102.

$$\begin{bmatrix} ed \\ eq \end{bmatrix} = C1 \begin{bmatrix} ea \\ eb \\ ec \end{bmatrix}$$

$$\dots (3)$$

$$C1 = \frac{2}{3} \begin{bmatrix} -\cos(\theta e) & -\cos(\theta e - 2\pi/3) & -\cos(\theta e + 2\pi/3) \\ \sin(\theta e) & \sin(\theta e - 2\pi/3) & \sin(\theta e + 2\pi/3) \end{bmatrix}$$

$$\dots (4)$$

The d axis current command value Idref is calculated by the Idref calculation section 105 using angular speed ωb, we and the torque command value Tref as input. Here, Kt represents torque coefficient, and ωb represents base angular speed of the motor. The base angular speed ωb is obtained by the conversion section 106 using the torque command value Tref as input.

Thus, the d axis current command value Idref is calculated using the following equation (5)

$$Idref = -|Tref/Kt| \cdot \sin(acos(\omega b/\omega m))$$

$$\dots (5)$$

As shown in the equation (5), since the d axis current command value Idref is varied by the rotation speed ωm, control at the time of high speed rotation can be carried out.

On the other hand, the q axis current command value Iqref is calculated based on the following equation (6) by the q axis command current calculation section 103 while using counter voltages ed, eq, ωe and the d axis current command value Idref. That is,

$$Iqref = 2/3(Tref \times \omega m - ed \times Idref)/eq$$

$$\dots (6)$$

Here, ωm represents mechanical angular speed of the motor, ωe represents electric angular speed, and P represents polar logarithm, and ωe = ωm × P.

As shown in the above equation, the q axis current command value Iqref can be calculated immediately because the output of the motor is led out from the output equation of the motor corresponding to the electricity. Thus, control to minimize the torque ripple can be carried out.

Since the current command values Idref and Iqref are converted into phase current command values, it is converted into command values Iavref, Ibvref, Icvref of phases using equation (7) by the 2 phase /3 phase conversion section 104. This subscript, e.g., avref of Iavref indicates a current command value of a phase determined by the vector control.

The determinant C2 is a constant determined by rotation angle θe of the motor as shown in equation (8).

$$
\begin{bmatrix} Iavref \\ Ibvref \\ Icvref \end{bmatrix} = C2 \begin{bmatrix} Idref \\ Iqref \end{bmatrix}
$$

$$\cdots \quad (7)$$

$$
C2 = \begin{bmatrix} -\cos(\theta e) & \sin(\theta e) \\ -\cos(\theta e - 2\pi/3) & \sin(\theta e - 2\pi/3) \\ -\cos(\theta e + 2\pi/3) & \sin(\theta e + 2\pi/3) \end{bmatrix}
$$

$$\cdots \quad (8)$$

Subtraction between the phase current command value Iavref, Ibvref, Icvref and phase currents Ia, Ib, Ic of the motor detected by the current detection circuits 32-1, 32-2, 32-3 is carried out by the subtracters 20-1, 20-2, 20-3, and errors are calculated. Next, the errors of the phase currents are controlled by the PI control section 21, and voltage command values Va, Vb, Vc indicative of the command value of the inverter 31, e.g., duty of the PWM control section 30 are calculated, the PWM control section 30 PWM controls the inverter 31 based on these values, and desired torque is generated. The explanation concerning the vector control section 100 is completed.

In the following, the effect of the first embodiment will be explained using Fig. 4.

First, when the rotation speed of the motor 1 is set rotation speed N, e.g., faster than 500rpm, since the number of hole signals per time obtained from the hole sensors 48-1, 48-2, 48-3 is large, the position-estimating circuit 41 can precisely detect the electric angular speed ωe of the motor 1 and the rotation angle θe of the rotor 7. Here, the LPF 49 is disposed in the input of the level detector 42. This is because that the effect of the LPF 49 eliminates noise of an output signal of the position-estimating circuit 41 to prevent determination of the level detector 42 from chattering. Since the rotation speed of the motor is equal to or higher than 500rpm shown in the setting section 43, the level detector 42 allows the switch 44 to connect the vector control section 100 with the current control section 46. If the electric angular speed ωe of the motor 1 and the rotation angle θe of the rotor 7 can be detected precisely as described above, the vector control section 100 calculates precise command values Iavref , Ibvref, Icvref.

Thus, the command values Iavref , Ibvref, Icvref are input to the current control section 46 through the switch 44, they are compared with a feedback current of the motor phase currents Ia, Ib, Ic detected by the current detection circuits 32-1, 32-2, 32-3, and they are feedback controlled. The PWM control section 30 determines a duty ratio of the inverter 31 based on the voltage command values Va, Vb, Vc which are output signals of the current control section 46, and the inverter 31 controls the motor 1 in accordance with the duty ratio. Since the motor rotates at high speed, the number of signals from the hole sensor 48 per time is sufficiently high and can be detected precisely, the vector control can also be controlled precisely.

Next, if the motor rotation speed is reduced and becomes lower than 500rpm, enough hole sensor signals per time cannot be obtained from the hole sensor to precisely control the vector control 20.

Wherein, Since the rotation speed obtained by the hole sensor becomes smaller than 500rpm shown by the setting section 43, the level detector 43 switches the switch 44 such that the current control section 46 and the rectangular wave control section 45 are connected to each other and switches the control mode to the rectangular wave current.

Here, it is important that the rectangular wave control section 45 does not use the output signal of the position-estimating circuit 41, and the hole sensor signals of the hole sensors 48-1, 48-2, 48-3 are directly input to the rectangular wave control section 45. Thus, even if the output of the position-estimating circuit 41 is not precise, the current command values Iasref , Ibsref, Icsref calculated by the rectangular wave control section 45 are not affected by the fact that the output of the position-estimating circuit 41 is not precise, and precise current command value can be calculated.

In the rectangular wave current, it is difficult to control such that the torque ripple becomes smaller when the motor rotates at high speed, but when the rotation speed is slow, if the control disclosed in JP-A No.2001-168151 is used, the torque ripple can be reduced. Therefore, when the rotation speed of the motor 1 is as low as 500rpm or lower, there is no problem concerning the torque control of the motor. Therefore, in the control after the current control section 46, the motor 1 is controlled in torque precisely based on the current command values Iasref, Ibsref, Icsref.

As explained above, if the present embodiment is used, the torque ripple can precisely be controlled when the motor rotates at high or low speed, and there is an effect that the steering wheel of the electric power steering apparatus can always be operated without a sense of incongruity.

The set rotation speed N is determined by the number of holes sensors and the performance of the position-estimating circuit 41. If the performance is excellent, N becomes smaller, and if the performance is poor, N becomes greater. If the number of hole sensors is increased, the range where precise detection can be carried out is increased, but cost is also increased.

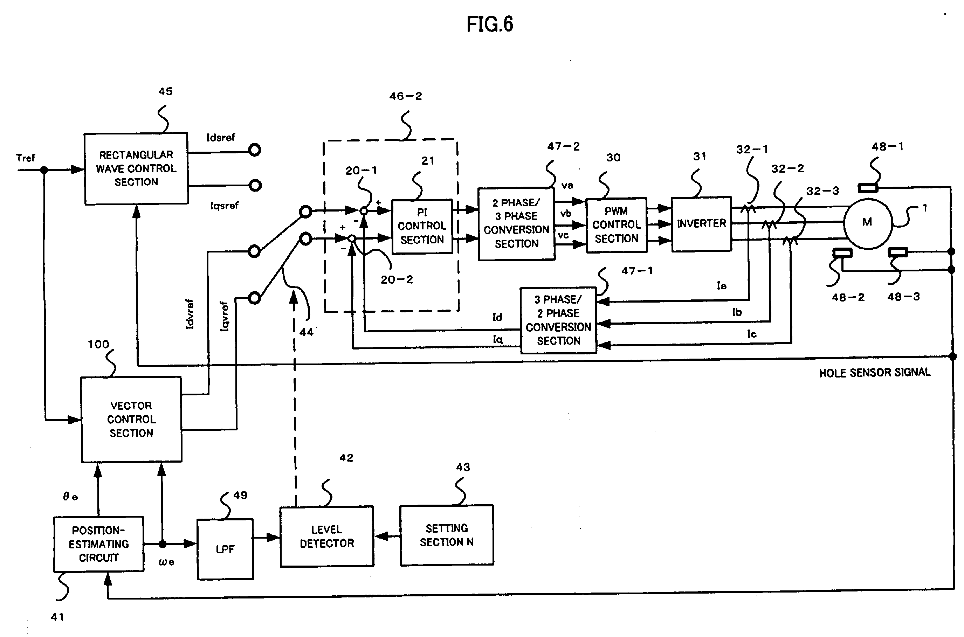

Fig. 6 shows a modification of the first invention. The rectangular wave control section 45 shown in Fig. 4 and the current command value, which is the output of the vector control section 100 are defined as the current command values Iasref, Ibsref, Icsref Iavref, Ibvref, Icvref of phases. However, since a general vector control uses the current command values Idref and Iqref using d and q axes components, in this modification, outputs of the rectangular wave control section 45 and the vector control section 100 are output by the d and q components as shown in Fig. 6. Further, the motor phase currents Ia, Ib, Ic are converted into Id and Iq by the 3 phase /2 phase conversion section 47-1 and fed back. The current command values Idref and Iqref and the fed back motor currents Id and Iq are used as input, control is carried out by the d and q axes up to the current control section 46-2 and finally, they are reversely converted into a, b, c phase components from the d and q components by the 2 phase /3 phase conversion section 47-2 by the input of the PWM control section 30 and the inverter 31 is controlled. With this also, the same effect can be obtained.

A second invention will be explained below.

Although the number of rotation speeds of the motor which determines the switching of the switch 44 was set to one (N) in the first invention, if the number of switching rotation speeds is one, there is a possibility that a driver may have a sense of incongruity during the steering wheel operation because the vector control and the rectangular wave current are frequently switched around the rotation speed N. To avoid such unfavorable phenomenon, hysteresis is utilized for switching, and two kinds of set rotation speeds are provided, i.e., switching rotation speed N1 when motor rotation speed is changed from low speed to high speed, and switching rotation speed N2 when the motor rotation speed is changed from high speed to low speed. With this, the chattering phenomenon as described above can be avoided.

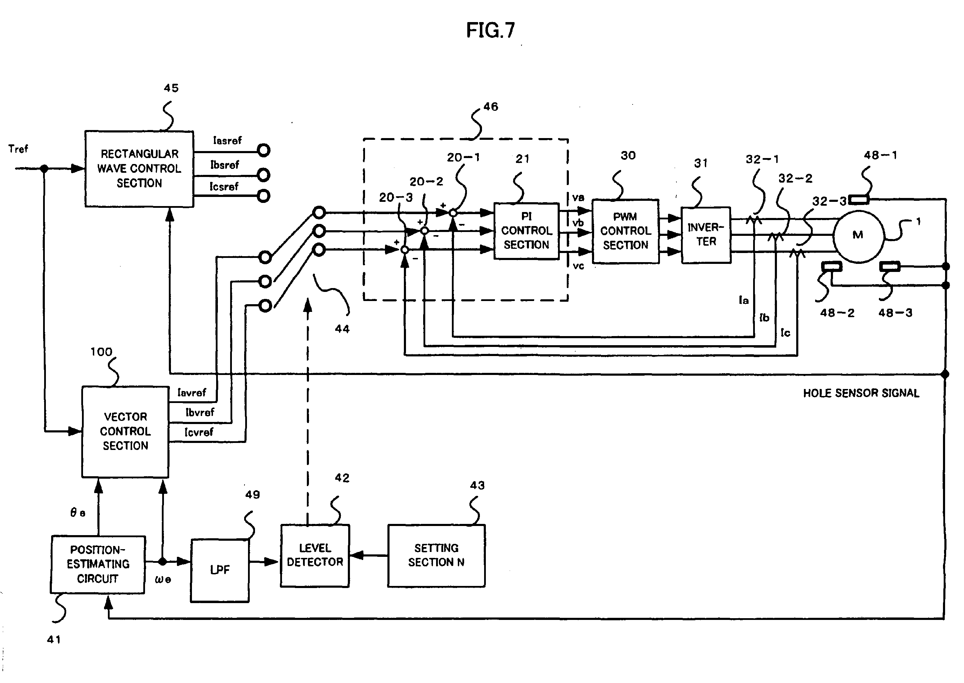

An embodiment of the second invention will be explained using Fig. 7.

The embodiment will be explained based on an assumption that a rotation speed N1 is 650rpm, and a rotation speed N2 is 500rpm.

First, a case in which the rotation speed of the motor 1 is reduced from high speed, e.g., 2000rpm to low speed, e.g., 400rpm will be explained. In this case, hole signals detected by the hole sensors 48-1, 48-2, 48-3 are input to the position-estimating circuit 41, and when they are determined in the level detector 42 having hysteresis, if the rotation speed is reduced, it is not determined in the rotation speed N1 indicative of 650rpm, but is determined in rotation speed N2, i.e., 500rpm indicated by the setting section 43. If the rotation speed of the motor 1 becomes lower than 500rpm, the level detector 42 switches the switch 44, and switches the current control section 46 from the vector control section 100 to the rectangular wave control section 45. When the motor 1 rotates at low speed, it is possible to precisely control the torque of the motor even if it is controlled by the rectangular wave control section as described above.

Next, when the rotation speed of the motor is increased from low speed to high speed, for example, when the rotation speed is increased from 400rpm to 2000rpm, the level detector 42 does not detect rotation speed N2, i.e., not 500rpm, the level detector 42 in which it becomes 650rpm or more which is rotation speed N1 indicated by the setting section 43 switches the switch 44 so that the current control section 46 switches the input from the rectangular wave control section 45 to the vector control section 100. If the rotation speed is 650rpm or higher, the position-estimating circuit 41 can detect sufficiently precise rotation angle θe of the rotor 7 and the electric angular speed ωe of the motor 1. Thus, even if the motor is controlled based on the command values Iavref, Ibvref, Icvref of the current control section 100, the torque of the motor can precisely be controlled. Thus, the electric power steering apparatus can smoothly follow the abrupt steering wheel operation, and the driver does not have a sense of incongruity of the steering wheel operation. If the level detector having hysteresis characteristics is used for switching the control, the switch 44 is alternately switched at high speed around 500rpm, the rectangular wave current and vector control are frequently switched, and it is possible to prevent a driver from feeing a sense of incongruity for the steering wheel operation.

In the above description, it is explained that the rotation signal of the motor is precisely output in detail with a resolver or encoder even at low speed, while the hole sensor can output the rotation signal only roughly. When the rotation signal can be output only roughly at low speed with the resolver or encoder, the present invention can be applied to the resolver or encoder, which can detect only roughly at low speed of course.

A third invention will be explained.

The embodiment is based on a case in which the invention is applied to the 3 phase brushless DC motor shown in Fig. 3, the invention can also be applied to other kinds of motors similarly.

In Fig. 3, a 3 phase brushless DC motor 1 of the embodiment of the invention includes a cylindrical housing 2, a rotation shaft 4 which is disposed along an axis of the housing 2 and which is rotatably supported by bearings 3a and 3b, a motor driving permanent magnet 5 fixed to the rotation shaft 4, and a stator 6 (hereinafter, simply referred to as a stator) which is fixed to an inner peripheral surface of the housing 2 such as to surround the permanent magnet 5 and around which 3 phase exciting coils are wound. The rotation shaft 4 and the permanent magnet 5 constitute a rotor 7 (hereinafter, simply referred to as a rotor). In Fig. 3, a position detecting ring-shaped permanent magnet 8 is fixed in the vicinity of one end of the rotation shaft 4 of the rotor 7. The permanent magnet 8 is polarized with south pole and north pole alternately at equal distances from one another in the circumferential direction.

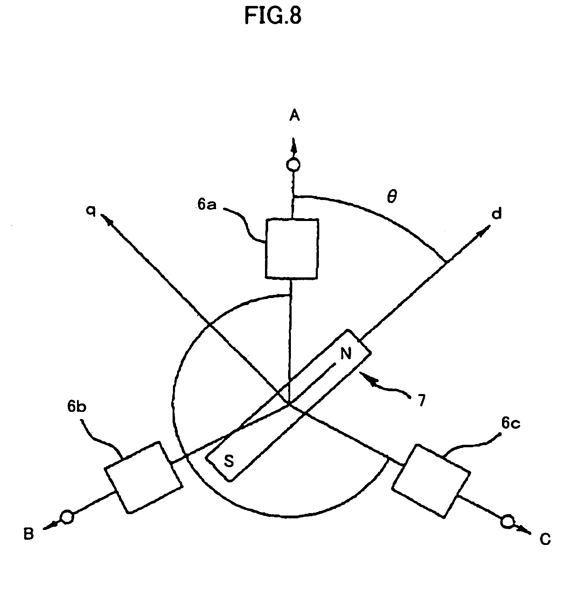

A support board 10 comprising a ring-shaped thin plate is disposed on an end surface in the housing 2 on which the bearing 3b is disposed. Position detection sensors 11 of a rotor such as a resolver or encoder are fixed to the support board 10 such that the position detection sensors 11 are opposed to the permanent magnet 8. The plurality of position detection sensors 11 of the rotor are disposed in the circumferential direction at appropriate distances from one another in accordance with driving timing of exciting coils 6a to 6c as shown in Fig. 8. Here, the exciting coils 6a to 6c are disposed such as to surround the outer peripheral surface of the rotor 7 through electric angle of 120° from one another, and coil resistances of the exciting coils 6a to 6c are equal to each other.

The position detection sensor 11 of the rotor outputs a position detection signal in accordance with a magnetic pole of the permanent magnet 8. The output of these rotation position detection sensors 11 detects rotation position of the rotor 7 utilizing the fact that it is varied depending upon the magnetic pole of the permanent magnet 8. In accordance with this rotation position, the later-described vector control section 100 brings the two phases at the same time with respect to the three phase exciting coils 6a to 6c and sequentially switches the exciting coils 6a to 6c one phase by one phase in a 2 phase exciting system, and the rotor 7 is rotated.

The rotation of the motor 1 is controlled using rectangular wave current (or trapezoidal wave current) as motor current. Here, the reason why the motor 1 is controlled using the rectangular wave current is that as compared with sine wave current, the rectangular wave current can obtain greater effective value if the current peak value is the same, and greater output value (power) can be obtained. As a result, when motors having the same performance are to be produced, there is a merit that the motor can be miniaturized if the rectangular wave current is used. On the other hand, the control using the rectangular wave current has a drawback that it is more difficult to reduce the torque ripple as compared with control using sine wave current. However, it is known that if the control method of the invention disclosed in JP-A No. 2003-376428 is used, the torque ripple can be reduced.

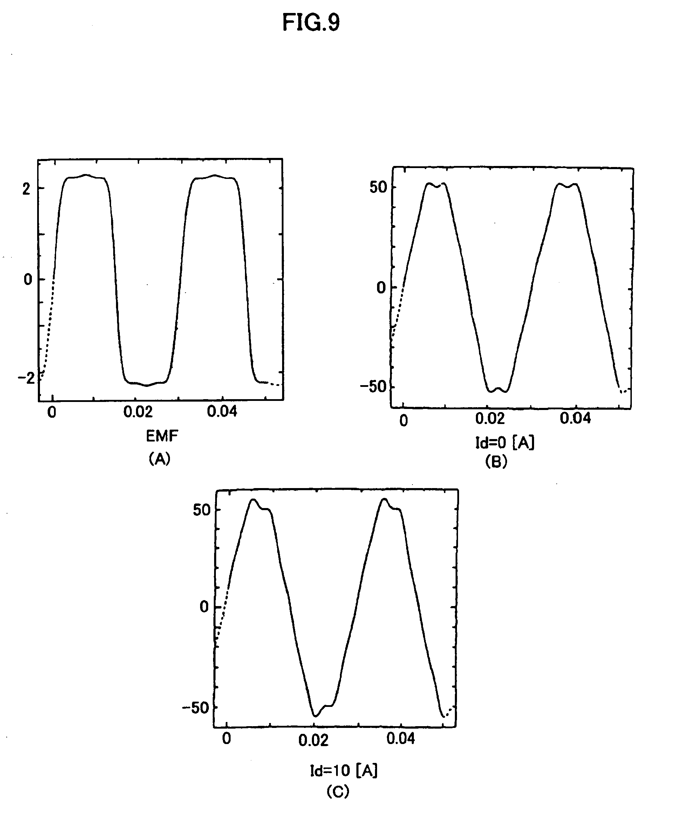

The rectangular wave current includes not only perfectly rectangular wave-like current waveform, but also pseudo rectangular wave current having a trapezoidal shape whose portion is broken as shown in Figs. 9(B) and (C). The rectangular wave current is also current waveform whose waveform is varied due to influence of the field weakening control, and the field weakening control is not carried out in the rectangular wave current shown in Fig. 9(B), i.e., current waveform when d axis current Id = 0, and the rectangular wave current shown in Fig. 9(C) is a current waveform when Id = 10A while the field weakening control is carried out. If the motor is energized with rectangular wave current or pseudo rectangular wave current, the counter voltage waveform of the motor as shown in Fig. 9(A) generates rectangular wave (trapezoidal wave) or pseudo rectangular wave as counter voltage of the motor. The present invention can also be applied to a motor having such rectangular wave current, pseudo rectangular wave current, rectangular wave counter voltage of pseudo rectangular wave counter voltage.

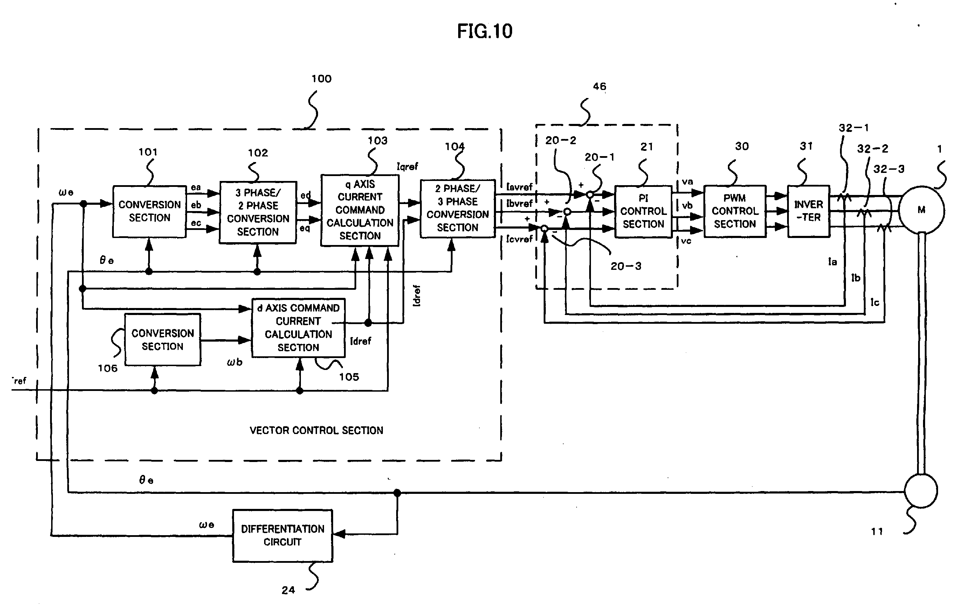

As shown in Fig. 10, the motor drive control apparatus includes the vector control section 100, subtracters 20-1, 20-2, 20-3 which obtain errors of phase current based on the command values Iavref , Ibvref, Icvref from the vector control section 100 and the motor phase currents Ia, Ib, Ic, and the PI control section 21 which carried out the proportional integral control. Current based on the current command value of the phase is supplied to the motor 1 from the inverter 31 by the PWM control of the PWM control section 30, and the rotation of the motor 1 is controlled.

In the embodiment, the apparatus comprises the subtracters 20-1, 20-2, 20-3 which obtain the phase current error from the command values Iavref, Ibvref, Icvref of the phase of the motor and the currents Ia, Ib, Ic of phase of the motor. The apparatus also comprises the PI control section 21, which uses the motor phase current error as input. The current detection circuits 32-1, 32-2, 32-3 are disposed between the inverter 31 and the motor 1 as the motor current detection circuit. A feedback control which supplies phase currents Ia, Ib, Ic detected by the current detection circuits 32-1, 32-2, 32-3 to the subtracters 20-1, 20-2, 20-3 is formed.

The vector control section 100 includes a conversion sections 101 as phase counter voltage ea, eb, ec calculation sections, 3 phase/2 phase conversion section 102 as calculation sections of d axis voltage ed, q axis voltage eq, a q axis command current calculation section 103 for calculating q axis current command value Iqref, 2 phase / 3 phase conversion sections 104 as calculation sections of phase current command values Iavref , Ibvref, Icvref, a d axis command current calculation section 105 for calculating d axis current command value Idref, and a conversion section 106 which converts torque command value Tref into base angular speed ωb of the motor. Under such structure, the vector control section 100 calculates rotation angle θe of the rotor 7 detected by the rotor position detection sensor 11 such as the resolver, a rotor position detection signal comprising the electric angular speed ωe obtained by calculating the rotation angle θe by the differentiation circuit 24, and the command values Iavref, Ibvref, Icvref of pahse utilizing the vector control while using the torque command value Tref determined based on the torque detected by the torque sensor (not shown) as input. The electric angular speed ωe which is output of the angular speed detection circuit comprising the position detection sensor 11 of the rotor 7 and the differentiation circuit 11 has a relation of ωm = ωe/P expressed using the polar logarithm of the motor with respect to the mechanical angular speed ωm.

Based on this structure, the rotation of the motor 1 is controlled in the manner described below.

First, the vector control section 100 receives the rotation angle θe of the rotor and the electric angular speed we, and counter voltages ea, eb, ec of the phases are calculated based on the conversion table of the conversion section 101. Next, the counter voltages ea, eb, ec are converted into counter voltages ed, eq of d and q components based on the equations (3) and (4) by the 3 phase/2 phase conversion section 102 as the d-q voltage calculation section.

Next, Idref obtained by the d axis command current calculation section 105 related to the field weakening control which is important point of the present invention will be explained in detail later. Here, the inside of the d axis command current calculation section 105 will not be explained, and the basic operation of the entire motor drive control apparatus shown in Fig. 10 will be explained first.

If the d axis current command value Idref is calculated by the d axis command current calculation section 105, the q axis current command value Iqref is calculated based on a motor output equation shown in the equation (9) by the q axis command current calculation section 103 while using the counter voltages ed, eq, the electric angular speed ωe and the d axis current command value Idref as inputs.

That is, the motor output equation is:

$$\texttt{Tref} \times \texttt{ωm} = \texttt{3/2(ed} \times \texttt{Id} + \texttt{eq} \times \texttt{Iq)} \ ... \ \texttt{(9)}$$

If Id = Idref and Iq = Iqref
are substituted into the equation (9), the following equation (10) is obtained:

$$\texttt{Iqref} = \texttt{2/3(Tref} \times \texttt{ωm} - \texttt{ed} \times \texttt{Idref)/eq} \ ... \ \texttt{(10)}$$

As shown in the equation (10), since the q axis current command value Iqref is obtained by the motor output equation in which the output of the motor corresponds to the electricity, this calculation can be carried out immediately. Further, the optimal Iqref having excellent balance with respect to Idref for obtaining necessary torque command value Tref is calculated. Therefore, the terminal voltage of the motor does not become saturated even when the motor rotates at high speed, and control to minimize the torque ripple can be carried out.

The current command values Idref and Iqref are converted into command values Iavref , Ibvref, Icvref of phases by the 2 phase /3 phase conversion section 104 as the phase current command value calculation sections. That is, it is expressed as shown in the equation (7). The determinant C2 is a constant determined by the rotation angle θe of the motor as shown in the equation (8).

In the present invention, as described above, the command values Iavref, Ibvref, Icvref of phases are calculated by the 2 phase /3 phase conversion section 104 while using the current command values Idref and Iqref as inputs. Next, subtraction between the phase current command value Iavref , Ibvref, Icvref and phase currents Ia, Ib, Ic of the motor detected by the current detection circuits 32-1, 32-2, 32-3 is carried out by the subtracters 20-1, 20-2, 20-3, and errors are calculated. Next, the errors of the phase currents are controlled by the PI control section 21, and voltage command values Va, Vb, Vc indicative of the command value of the inverter 31, e.g., duty of the PWM control section 30 are calculated, the PWM control section 30 PWM controls the inverter 31 based on these values, and desired torque is generated.

According to the control method of the motor drive control apparatus used in this embodiment, the current command value of the vector control d and q components are determined by utilizing characteristics having excellent vector control and then, the current command value is converted into phase current command value, and the feedback control section closes all phase controls not d, q controls. Thus, in the stage for calculating the current command value, since the theory of the vector control is utilized, this control is called PVC control.

The basic operation of the motor drive control apparatus has been explained above.

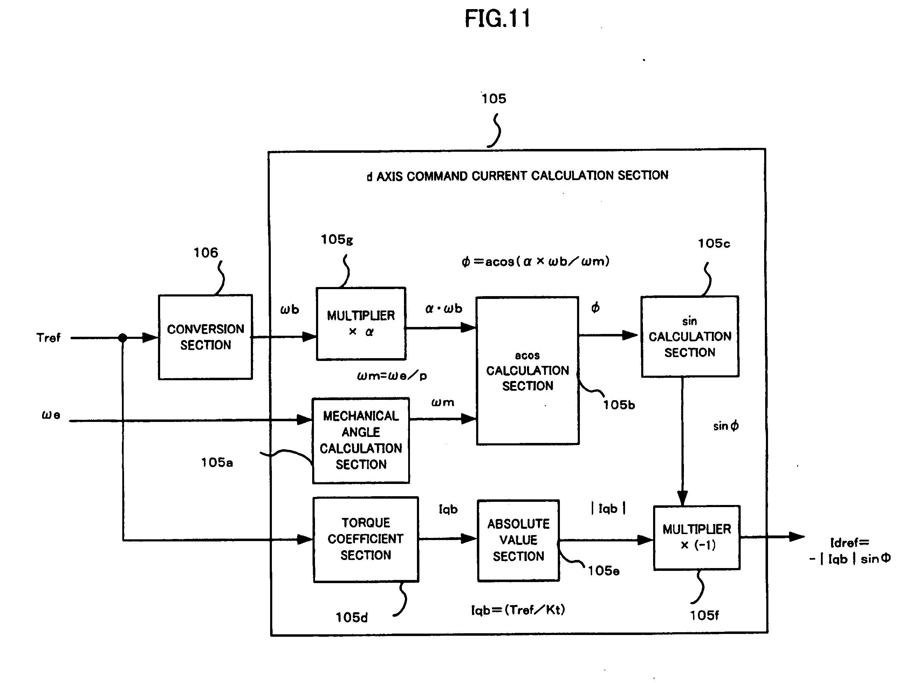

Next, characteristics of calculation of the d axis current command value Idref, which is a third important point will be explained in detail using Fig. 11.

First, an equation (11) shows the conventional way of obtaining the current command value Idref.

$$\text{Idref} = -\left|\text{Tref} \diagup \text{Kt}\right| \sin(\text{acos}(\omega b \diagup \omega m)) \quad \dots \quad (11)$$

When current command value Idref = 0, the field weakening control is not carried out, and if Idref ≠ 0, i.e., if Idref has a value, the field weakening control is carried out.

The switching of the start and stop of the field weakening control is determined by the acos (ωb/ωm) of the equation (11). For example, when the rotation speed of the motor is not high speed rotation, i.e., when the mechanical angular speed ωm is slower than the base angular speed ωb, since ωm < ωb, acos (ωb/ωm) is equal to 0 and thus, the d axis current command value Idref becomes equal to 0. However, at the time of high speed rotation, i.e., when the mechanical angular speed ωm becomes faster than the base angular speed ωb, the value of the d axis current command value Idref becomes negative, and the field weakening control is started.

When the equation (11) is used, as long as the mechanical angular speed ωm of the motor 1 is precisely detected and, unless the base angular speed ωb is precisely calculated, the switching between start and stop of the field weakening control is not precisely carried out. That is, there are generated inconveniences that due to detection error of the position detection sensor of the rotor or due to calculation error generated during control procedure of the motor drive control apparatus, although the field weakening control is necessary, the field weakening control is not carried out, the torque ripple becomes great, and a driver has a sense of incongruity for the steering wheel operation.

Thereupon, in the present invention, a new idea, i.e., angular speed (α×ωb) which is a new base angular speed which reduces the value of the base angular speed ωb is introduced so that even if there is slight error in the mechanical angular speed ωm or base angular speed ωb, the field weakening control is reliably carried out before the terminal voltage of the motor becomes saturated. Here, α is in a range of 0<α<1.

Taking this function into consideration, an equation for calculating the Idref according to the present invention in which the equation (11) is changed can be expressed as in the following equation (12):

$$\text{Idref} = -\left|\text{Tref}\diagup\text{Kt}\right| \sin\left(\text{acos}\left(\alpha \times \omega b \diagup \omega m\right)\right) \quad \dots \quad (12)$$

Fig. 11 is a control block diagram for calculating the improved d axis current command value Idref expressed in the equation (12).

The d axis current command value Idref is obtained by the d axis command current calculation section 105 while using the base angular speed ωb, electric angular speed ωe and the torque command value Tref as inputs. Here, Kt represents torque coefficient. First, ωb is obtained by the conversion section 106 based on the base angular speed of the motor while using the torque command value Tref as input. Next, the angular speed (α×ωb) which is the point of the present invention is multiplied by α by inputting the base angular speed ωb by a multiplier 105g and is output as the angular speed (α×ωb).

On the other hand, the mechanical angular speed ωm (=ωe/P) of the motor is calculated by a mechanical angle calculation section 105a from the electric angular speed ωe of the motor. Here, P represents an polar logarithm. Next, an angle φ is calculated by an acos calculation section 105c as φ=acos (α×ωb/ωm). Further, sin φ is obtained by a sin calculation section 105c. Further, current Iqb = Tref/Kt is obtained by a torque coefficient section 105d, current Iqb is input by an absolute value section 105e to obtain absolute value Iqb, and the absolute value is multiplied by (-1) times by the multiplier 105f. The above calculation is expressed as in an equation (13). That is, the improved d axis current command value Idref is calculated as output of the d axis command current calculation section 105 in the form of the equation (13).

$$\mathtt{Idref = -\ |Iqb|\ \times\ sin\ (acos\ (\alpha \times \omega b / \omega m))\ ...\ (13)}$$

The equations (12) and (13) are substantially the same.

Here, if attention is paid to the term acos ($\alpha \times \omega b / \omega m$) of the equation (13), the angular speed ($\alpha \times \omega b$) is greater than the mechanical angular speed $\omega m$. That is, when the motor rotates at low speed, since the d·axis current command value Idref is equal to 0, the field weakening control is not carried out. If the mechanical angular speed $\omega m$ is greater than the angular speed ($\alpha \times \omega b$), i.e., when the motor rotates at high speed, since Idref $\neq$ 0, i.e., the value of the d axis current command value Idref becomes negative, and the field weakening control is carried out.

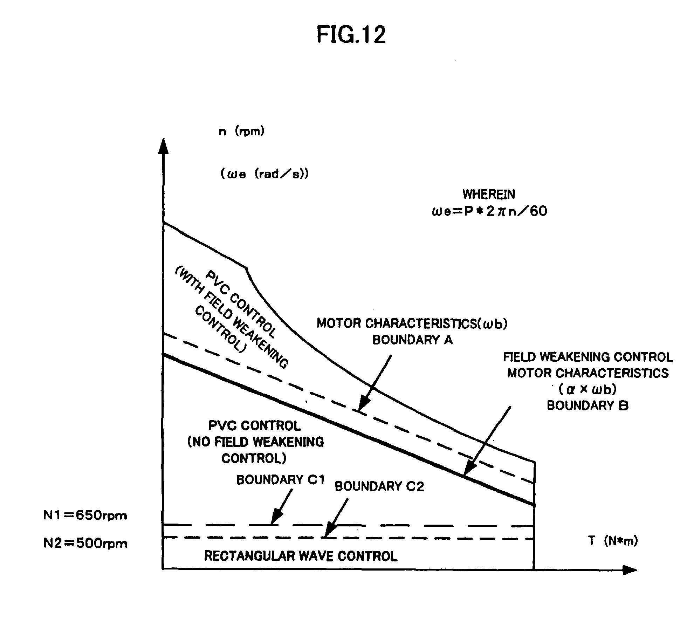

To indicate the excellent effect obtained by the control of the improved d axis current command value Idref of the above-explained present invention, Fig. 12 shows a region of the field weakening control by the d axis current command value Idref of the equation (13) of the invention, and a region of the field weakening control of the conventional d axis current command value Idref shown in the equation (11). The field weakening control of the present invention is switched on a boundary B. The field weakening control of the conventional control method is switched on a boundary A. As is apparent from Fig. 12, due to the effect obtained by multiplying the base angular speed $\omega b$ by $\alpha$, the field weakening control of the present invention is started in a region where the field weakening control of the conventional method has not yet been started.

If the two boundaries are compared, it can be found that in the case of the present invention, the control mode is switched to field weakening control faster than ideal case. Thus, even if there is slight error in the detection of the rotor position, or there is slight error in control calculation of the motor drive control apparatus, the field weakening control is reliably carried out.

Here, although it is described as slight error, the value of the above-described $\alpha$ is varied depending upon a degree of this error. When the error is small, $\alpha$ gets closer and closer to 1, and when the error is great, $\alpha$ gets closer and closer to 0. For example, in the case of the encoder or resolver, if $\alpha$ is 0.95, $\alpha$ is 0.9 in the case of the hole sensor. Since as $\alpha$ gets closer and closer to 0, a region including the field weakening control is reduced. Thus, it is preferable that detection error or calculation error is reduced so that $\alpha$ gets closer and closer to 1.

Although the resolver is used as the position detection sensor 11, which is a constituent part of the angular speed detection circuit in this embodiment, the same effect can be obtained even if a hole sensor which is less expensive than the resolver is used.

Next, an embodiment of a motor drive control apparatus capable of PVC controlling the motor 1 using an inexpensive hole sensor is used as the angular speed detection circuit of the rotor 7 will be explained. When a precise resolver or encoder is used as the angular speed detection circuit of the rotor 7 in the third invention, even if the rotor 7 rotates at low speed, the electric angular speed $\omega e$ or rotation angle $\theta e$ of the rotor can precisely be detected and thus, the motor can be precisely PVC controlled even when the motor rotates at low speed. However, if the hole sensor is used for the angular speed detection circuit, since the number of samplings per unit time of the hole sensor is reduced when the rotation speed of the rotor 7 is reduced, the electric angular speed $\omega e$ or rotation angle $\theta e$ of the rotor cannot precisely be detected, and the PVC control cannot be carried out precisely.

Thereupon, when the rotation speed of the rotor 7 is reduced, the control mode is switched to the rectangular wave control, which does not require the electric angular speed $\omega e$ or rotation angle $\theta e$ of the rotor instead of the PVC control. With this, it is possible to provide a motor drive control apparatus in which even if the hole sensor is used, the effect of the third invention can be obtained in a range other than the rotation speed range of the rotor, and PVC control can be carried out, and the rectangular wave control can be carried out in the low rotation speed range.

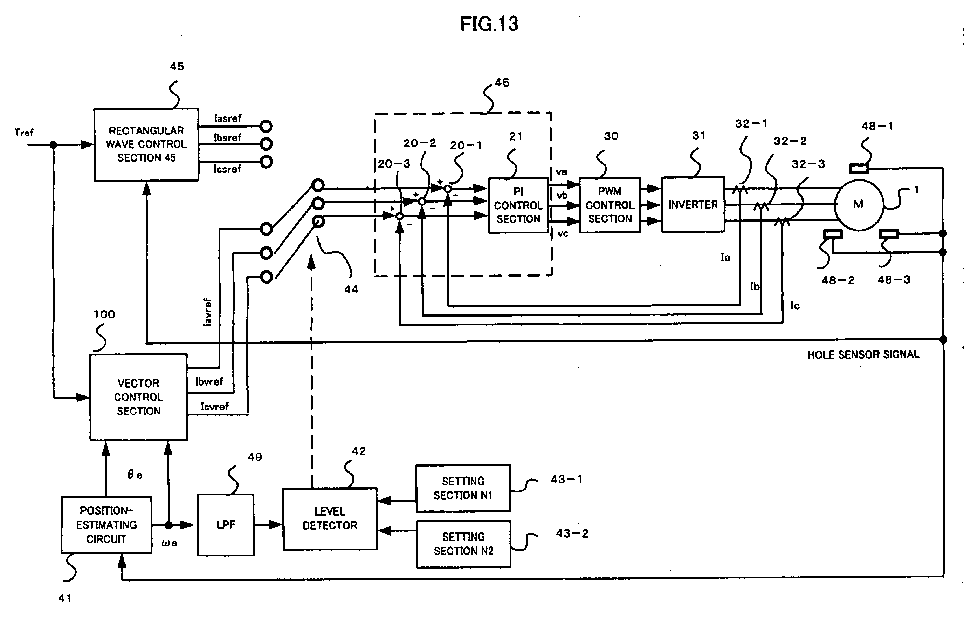

The embodiment of the fourth invention will be explained using Fig. 13.

In the fourth invention, the angular speed detection circuit comprises hole sensors 48-1, 48-2, 48-3 and a position-estimating circuit 41. As output of the position-estimating circuit 41, electric angular speed $\omega e$ as rotation speed of the motor and rotation angle $\theta e$ as a rotor position of the motor are output. Various position-estimating circuits 41 have been proposed, and details of the circuits are described in JP-A No.2002-272163 for example.

Next, when the rotation speed of the rotor is reduced and precision of electric angular speed $\omega e$ or rotation angle $\theta e$ which are output of the position-estimating circuit 41 is deteriorated and vector control section 100 is not correctly operated, a rectangular wave control section 45 used as a substitute for the control section is disposed while using the torque command value Tref and hole sensor signals from the hole sensors 48-1, 48-2, 48-3 as inputs. The rectangular wave control section 45 is conventionally well known, and is described in JP-A No. 2002 369569 for example. The rectangular wave control has characteristics that a hole sensor signal is directly used and it is unnecessary to estimate the position of the rotor as shown in Fig. 13. Thus, even if detection error of the hole sensors 48-1, 48-2, 48-3 and the position-estimating circuit 41 are increased, the rectangular wave control can be carried out without any problem.

Lastly, a switch 44 for switching between PVC control and rectangular wave control, a level detector 42 having hysteresis characteristics for determining the switching angular speed, and setting sections 43-1 and 43-2 for setting the angular speed of hysteresis are disposed.

The reason why the level detector 42 is provided with the hysteresis characteristics is that if the switching angular speed is one, the vector control and the rectangular wave control are frequently switched around the angular speed, and there is a possibility that a driver has a sense of incongruity. To avoid such unfavorable phenomenon, hysteresis is utilized for switching, and if two kinds of setting angular speeds, i.e., switching angular speed N1 when the motor rotation speed is changed from low speed to high speed and switching angular speed N2 in which the motor rotation speed is changed from high speed to low speed are provided, the chattering phenomenon as described above can be avoided.

As one example, a set angular speed N1 of the setting section 43-1 is set to 500rpm, and a set angular speed N2 of the setting section 43-2 is set to 650rpm. Since ripple is included in output of the position-estimating circuit 41, a low pass filter (LPF, hereinafter) for removing ripple is disposed between the position-estimating circuit 41 and the level detector 42. The switch 44, which is switched by determination of the level detector 42 is disposed at a position where the vector control section 100 and the rectangular wave control section 45 are selected as input to the current control section 46.

The operation of switching control between the vector control section 100 and the rectangular wave control section 45 having such structures will be explained.

First, a case in which the rotation speed of the motor 1 is reduced from high speed, e.g., 2000rpm to low speed, e.g. , 400rpm will be explained. In this case, hole signals detected by the hole sensors 48-1, 48-2, 48-3 are input to the position-estimating circuit 41, and when they are determined in the level detector 42 having hysteresis, if the rotation speed is reduced, it is not determined in the rotation speed N1 indicative of 650rpm, and if the speed becomes lower than the rotation speed N2 indicated by the setting section 43-2, i.e., 500rpm, the level detector 42-2 switches the switch 44, and switches the current control section 46 from the vector control section 100 to the rectangular wave control section 45. When the motor 1 rotates at low speed, it is possible to precisely control the torque of the motor even if it is controlled by the rectangular wave control section 45 as described above.

Next, when the rotation speed of the motor is increased from low speed to high speed, for example, when the rotation speed is increased from 400rpm to 2000rpm, the level detector 42 does not detect rotation speed N2, i.e., not 500rpm, the level detector 42 in which it becomes 650rpm or more which is rotation speed N1 indicated by the setting section 43-1 switches the switch 44 so that the current control section 46 switches the input from the rectangular wave control section 45 to the vector control section 100. If the rotation speed is 650rpm or higher, the position-estimating circuit 41 can detect sufficiently precise rotation angle θe of the rotor 7 and the electric angular speed ωe of the motor 1. Thus, even if the motor is controlled based on the command values Iavref , Ibvref, Icvref of the vector control section 100, the torque of the motor can precisely be controlled.

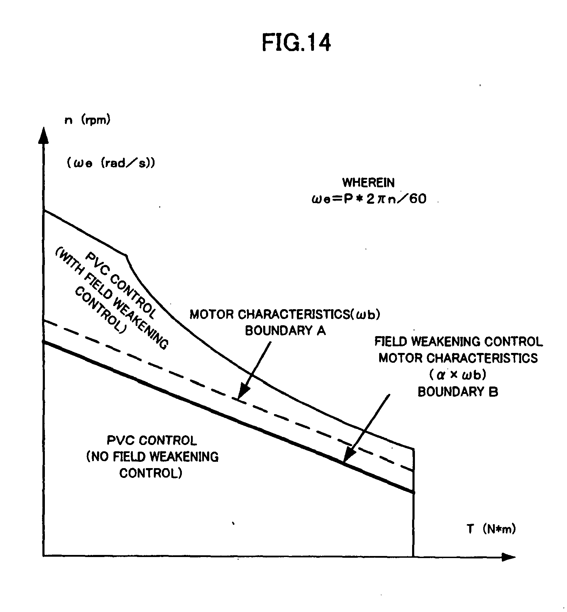

Fig. 14 shows the relation between the rotation speed of the motor when the fourth and third inventions described above are combined, and the control method of the motor with respect to the output torque. In Fig. 14, if the rotation speed of the motor is changed from high speed to low speed due to effect of the fourth invention, the PVC control is switched to the rectangular wave control at the boundary C2 (N2=500rpm), and if the rotation speed is changed from the low speed to high speed again, the rectangular wave control is switched to the PVC control at the boundary C1 (N1=650rpm). If the rotation speed is further increased, the PVC control (no field weakening control) is switched to PVC control (with field weakening control) at the boundary B due to the effect of the third invention, and PVC control having small torque ripple can be realized even at high speed rotation.

That is, if the third and fourth inventions are combined to establish a hybrid structure in which even if the brushless DC motor (rectangular wave motor) and the hole sensor are combined, the rectangular wave control is selected when the motor rotates at low speed, PVC control is selected when the motor rotates at medium speed, and PVC control (field weakening control) is selected when the motor rotates at high speed. With this, control of low torque ripple at the time of high speed rotation which was impossible in the conventional rectangular wave motor can be carried out.

Although two set angular speeds are used for switching and the hysteresis characteristics are used in the embodiment, even if one set angular speed is used for switching, the same effect can be obtained of course except frequent switching between the vector control and the rectangular wave control.

Although the phase voltages ea, eb, ec are used as the counter voltages in the embodiments of the first to fourth inventions, the same effect can be obtained even if they are converted into line voltages eab, ebc and eca and controlled.

As described above, if the motor drive control apparatus and the electric power steering apparatus of the present invention are used, there is effect that it is possible to provide a motor drive control apparatus in which an inexpensive motor position-estimating circuit is used, drawback of vector control when the motor rotates at low speed can be avoided, torque of the motor can precisely be controlled by the vector control in other wide rotation speed range, and it is possible to provide an electric power steering apparatus in which steering wheel operation is smooth and noise is small.

Further, if the present invention is used, it is possible to provide a motor drive control apparatus in which even if there are error in position detection of the rotor or control calculation error of the motor drive control apparatus, the motor terminal voltage does not become saturated even if the motor rotates at high speed, and when the field weakening control is started, torque ripple is small, motor noise is small, and it is possible to provide an electric power steering apparatus in which the apparatus can smoothly follow abrupt steering wheel operation and a driver does not have a sense of incongruity, and noise is small. Even if an inexpensive hole sensor is used for detecting a position of the rotor of the brushless DC motor, since the hybrid structure selects the rectangular wave control when the motor rotates at low speed, selects PVC control when the motor rotates at medium speed, and selects PVC control (field weakening control) when the motor rotates at high speed. With this, it is possible to provide an inexpensive motor drive control apparatus in which control of low torque ripple at the time of high speed rotation which was impossible in the conventional rectangular wave motor can be carried out, and it is possible to provide an electric power steering apparatus in which the apparatus can smoothly follow abrupt steering wheel operation and a driver does not have a sense of incongruity, and noise is small.

Industrial Availability

According to the present invention, a brushless DC motor can be vector controlled even if a motor position detection sensor which is inexpensive like the hole sensor but which cannot output precise and detailed rotation angle signal at the time of low speed rotation of the motor is used as a position detection sensor of the motor. Therefore, if the invention is applied to the electric power steering apparatus, it is possible to apply an inexpensive electric power steering apparatus having small torque ripple and capable of operating a steering wheel with nice feeling.

Further, according to the present invention, even if there exists detection error in a motor position detection sensor or the like, field weakening control can reliably be carried out, and motor output having small torque ripple can be expected. Therefore, if it is applied to an electric power steering apparatus, it is possible to provide an electric power steering apparatus having small torque ripple and capable of excellently operating the steering wheel.

**Claims**

1. A motor drive control apparatus of a motor (1) having three or more phases, comprising:

    a motor position-estimating circuit (41) for calculating rotation speed of the motor (1) and rotor position of the motor (1);
    a vector control section (100) for vector controlling based on rotation speed and the rotor position of the motor (1) calculated by the motor position-estimating circuit (41);
    a rectangular wave control section (45) for rectangular wave controlling the motor (1);
    a switch (44) for switching between two control sections (45, 100); and
    a level detector (42) having a set rotation speed N which is a determination reference of the switching of the switch (44), wherein
    the control is performed by switching the switch (44) such that when the rotation speed of the motor (1) calculated by the motor position-estimating circuit (41) is faster than the set rotation speed N, the vector control section (100) controls, and
    when the rotation speed is slower than the set rotation speed N, the rectangular wave control section (45) controls.

2. The motor drive control apparatus according to claim 1, wherein the level detector (42) comprises set rotation speeds N1 and N2 (wherein, N1>N2) having different set rotation speeds,
    the motor drive control apparatus has such hysteresis characteristics that the rotation speed of the motor (1) is slower than the set rotation speed N1 during rising process and is high speed, the switch (44) is switched such that control is carried out by the vector control section (100) from the rectangular wave control section (45), and
    when the rotation speed of the motor (1) exceeds the set rotation speed N2 during the lowering process and is low speed, the switch (44) is switched such that the control is carried out by the rectangular wave control section (45).

3. The motor drive control apparatus according to claim 1, wherein the motor drive control apparatus comprising:

a d axis command current calculation section (105) for calculating a d axis current command value Idref for vector controlling the motor (1);

a q axis command current calculation section (103) for calculating a q axis current command value Iqref, and an angular speed detection circuit for detecting at least mechanical angular speed ωm of the motor (1), wherein when the mechanical angular speed ωm is faster than angular speed (α×ωb) obtained by multiplying base angular speed ωb of the motor by (0<α<1), the d axis current command value Idref is obtained from torque command value Tref of the motor (1), the angular speed (α×ωb) and the mechanical angular speed ωm.

4. The motor drive control apparatus according to any one of claims 1 to 3, wherein the motor position-estimating circuit (41) comprises at least a hole sensor (48-1, 48-2, 48-3).

5. The motor drive control apparatus according to claim 3, wherein when the angular speed detection circuit comprises a hole sensor (48-1, 48-2, 48-3) as a constituent element, the motor drive control apparatus comprises

an angular speed detection circuit for calculating mechanical angular speed ωm of the motor (1) and a position of a rotor (7) of the motor(1);

a vector control section (100) for vector controlling based on angular speed ωm of the motor (1) and the rotor position calculated by the angular speed detection circuit;

a rectangular wave control section (45) for rectangular wave controlling the motor (1); a switch (44) for switching the two control sections (45, 100); and

a level detector (42) having set angular speed which becomes determination reference of the switching of the switch (44), and

the control is performed by switching the switch (44) such that when the mechanical angular speed ωm calculated by the angular speed detection circuit is faster than the set angular speed , the vector control section (100) controls, and

when the mechanical angular speed ωm is slower than the set angular speed, the rectangular wave control section (45) controls.

6. The motor drive control apparatus according to any one of claims 1 to 5, wherein the motor (1) is a brushless DC motor having three or more phases.

7. The motor drive control apparatus according to any one of claims 1 to 6, wherein current waveform or counter voltage waveform of the brushless DC motor (1) is rectangular wave or pseudo rectangular wave.

8. An electric power steering apparatus using the motor drive control apparatus according to any one of claims 1 to 7.

**Patentansprüche**

1. Motorantriebssteuerungsvorrichtung eines Motors (1) mit drei oder mehr Phasen aufweisend:

eine Motorpositionsschätzschaltung (41) zum Berechnen einer Drehzahl des Motors (1) und einer Rotorposition des Motors (1);

einem Vektorsteuerbereich (100) zum Vektorsteuern basierend auf der Drehzahl und der Rotorposition des Motors (1), die von der Motorpositionsschätzschaltung (41) berechnet werden;

einen Rechteckwellensteuerbereich (45) zum Rechteckwellensteuern des Motors (1);

einen Schalter (44) zum Schalten zwischen zwei Steuerbereichen (45, 100); und

einen Niveaudetektor (42) mit einer vorgegebenen Drehzahl N, die ein Entscheidungsreferenzwert des Schaltens des Schalters (44) ist, wobei

die Steuerung durch Schalten des Schalters (44) so durchgeführt wird, dass der Vektorsteuerbereich (100) steuert, wenn die von der Motorpositionsschätzschaltung (41) berechnete Drehzahl des Motors (1) schneller als die vorgegebene Drehzahl N ist, und

der Rechteckwellensteuerbereich (45) steuert, wenn die Drehzahl kleiner als die vorgegebene Drehzahl N ist.

2. Motorantriebssteuerungsvorrichtung nach Anspruch 1, wobei der Niveaudetektor (42) vorgegebene Drehzahlen N1 und N2 (wobei N1 > N2) mit verschiedenen vorgegebenen Drehzahlen hat, die Motorantriebssteuervorrichtung solch eine Hysterese-Charakteristik hat, dass der Schalter (44) so geschaltet wird, dass die Steuerung von dem Vektorsteuerbereich (100) anstelle des Rechteckwellensteuerbereichs (45) ausgeführt wird, wenn die Drehzahl des Motors während des Beschleunigungsvorgangs kleiner als die vorgegebene Drehzahl N1 und eine hohe Drehzahl ist, und

der Schalter so geschaltet wird, dass die Steuerung von dem Rechteckwellensteuerbereich (45) ausgeführt wird, wenn die Drehzahl des Motors (1) während des Abbremsvorgangs größer als die vorgegebene Drehzahl N2 ist und eine geringe Drehzahl ist.

3. Motorantriebssteuerungsvorrichtung nach Anspruch 1, wobei die Motorantriebssteuerung aufweist:

einen d-Achsen-Befehlsstromberechnungsbereich (105) zum Berechnen eines d-Achsen-Befehlsstromwertes Iderf zum Vektorsteuern des Motors (1);

einen q-Achsen-Befehlsstromberechnungsbereich (103) zum Berechnen eines q-Achsen- Befehlsstromwertes Iqerf; und

eine Winkelgeschwindigkeiterkennungsschaltung zum Erkennen wenigstens der mechanischen Winkelgeschwindigkeit $\omega$m des Motors (1), wobei,

der d-Achsen-Befehlsstromwert Iderf aus dem Drehmomentbefehlswert Tref des Motors (1), der Winkelgeschwindigkeit ($\alpha$x$\omega$b) und der mechanischen Winkelgeschwindigkeit $\omega$m erhalten wird, wenn die mechanische Winkelgeschwindigkeit $\omega$m größer als die Winkelgeschwindigkeit ($\alpha$x$\omega$b) ist, die durch Multiplizieren der Basiswinkelgeschwindigkeit $\omega$b des Motors mit $\alpha$($0 < \alpha < 1$) erhalten wird.

4. Motorantriebssteuerungsvorrichtung nach einem der Ansprüche 1 bis 3, wobei die Motorpositionsschätzschaltung (41) wenigstens einen Lochsensor (48-1, 48-2, 48-3) aufweist.

5. Motorantriebssteuerungsvorrichtung nach Anspruch 3, wobei die Motorantriebssteuerungsvorrichtung, wenn die Drehzahlerkennungsschaltung als wesentlichen Bestandteil einen Lochsensor (48-1, 48-2, 48-3) hat, aufweist:

eine Winkelgeschwindigkeitserkennungsschaltung zum Berechnen der mechanischen Winkelgeschwindigkeit $\omega$m des Motors (1) und einer Position eines Rotors (7) des Motors (1);

einen Vektorsteuerbereich (100) zum Vektorsteuern basierend auf der Winkelgeschwindigkeit $\omega$m des Motors (1) und der von der Winkelgeschwindigkeitserkennungsschaltung berechneten Rotorposition;

einen Rechteckwellensteuerbereich (45) zum Rechteckwellensteuern des Motors (1); einen Schalter (44) zum Schalten der beiden Steuerbereiche (45, 100) und

einen Niveaudetektor (42) mit einer vorgegebenen Winkelgeschwindigkeit, die ein Entscheidungsrefenzwert des Schaltens des Schalters (44) wird, und

die Steuerung durch Schalten des Schalters (44) so durchgeführt wird, dass der Vektorsteuerbereich (100) steuert, wenn die von der Winkelgeschwindigkeitserkennungsschaltung berechnete mechanische Winkelgeschwindigkeit $\omega$m größer als die vorgegebene Winkelgeschwindigkeit ist, und

der Rechteckwellensteuerbereich (45) steuert, wenn die mechanische Winkelgeschwindigkeit $\omega$m kleiner als die vorgegebene Winkelgeschwindigkeit ist.

6. Motorantriebssteuerungsvorrichtung nach einem der Ansprüche 1 bis 5, wobei der Motor (1) ein bürstenloser Gleichstrommotor mit drei oder mehr Phasen ist.

7. Motorantriebssteuerungsvorrichtung nach einem der Ansprüche 1 bis 6, wobei die Stromwellenform oder Gegenspannungswellenform des bürstenlosen Gleichstrommotors (1) eine Rechteckwelle oder eine Pseudorechteckwelle ist.

8. Elektrische Servolenkvorrichtung, welche die Motorantriebssteuerungsvorrichtung nach einem der Ansprüche 1 bis 7 verwendet.

**Revendications**

1. Appareil de commande d'entraînement de moteur d'un moteur (1) ayant trois phases ou plus, comprenant :

un circuit d'estimation de position de moteur (41) pour calculer
la vitesse de rotation du moteur (1) et la position de rotor du moteur (1) ;
une section de commande vectorielle (100) pour commander de manière vectorielle en fonction de la vitesse de rotation et la position de rotor du moteur (1) calculée par le circuit d'estimation de position de moteur (41) ;

une section de commande par onde rectangulaire (45) pour commander par onde rectangulaire le moteur (1) ;

un commutateur (44) pour la commutation entre deux sections de commande (45, 100) ; et

un détecteur de niveau (42) ayant une vitesse de rotation N déterminée qui est une référence de détermination de la commutation du commutateur (44), dans lequel :

la commande est réalisée en commutant le commutateur (44) de sorte que lorsque la vitesse de rotation du moteur (1) calculée par le circuit d'estimation de position de moteur (41) est plus rapide que la vitesse de rotation N déterminée, la section de commande vectorielle (100) commande, et

lorsque la vitesse de rotation est inférieure à la vitesse de rotation N déterminée, la section de commande par onde rectangulaire (45) commande.

2. Appareil de commande d'entraînement de moteur selon la revendication 1, dans lequel le détecteur de niveau (42) comprend des vitesses de rotation N1 et N2 déterminées (où N1 > N2) ayant des vitesses de rotation déterminées différentes,

l'appareil de commande d'entraînement de moteur a de telles caractéristiques d'hystérésis que la vitesse de rotation du moteur (1) est inférieure à la vitesse de rotation N1 déterminée pendant le procédé de montée et est une vitesse élevée, le commutateur (44) est commuté de sorte que la commande est réalisée par la section de commande vectorielle (100) à partir de la section de commande par onde rectangulaire (45), et

lorsque la vitesse de rotation du moteur (1) dépasse la vitesse de rotation N2 déterminée pendant le procédé d'abaissement et est une vitesse lente, le commutateur (41) est commuté de sorte que la commande est réalisée par la section de commande par onde rectangulaire (45).

3. Appareil de commande d'entraînement de moteur selon la revendication 1, dans lequel l'appareil de commande d'entraînement de moteur comprenant :

une section de calcul de courant de commande à axe d (105) pour calculer une valeur de commande de courant à axe d Idref pour commander le moteur (1) de manière vectorielle ;

une section de calcul de courant de commande à axe q (103) pour calculer une valeur de commande de courant à axe q Iqref ; et

un circuit de détection de vitesse angulaire pour détecter au moins une vitesse angulaire mécanique $\omega$m du moteur (1), dans lequel :

lorsque la vitesse angulaire mécanique $\omega$m est plus rapide que la vitesse angulaire ($\alpha$x$\omega$b) obtenue en multipliant la vitesse angulaire de base $\omega$b du moteur par $\alpha$ ($0 < \alpha < 1$), la valeur de commande de courant à axe d Idref est obtenue à partir de la valeur de commande de couple Tref du moteur (1), la vitesse angulaire ($\alpha$x$\omega$b) et la vitesse angulaire mécanique $\omega$m.

4. Appareil de commande d'entraînement de moteur selon l'une quelconque des revendications 1 à 3, dans lequel le circuit d'estimation de position de moteur (41) comprend au moins un capteur de trou (48-1, 48-2, 48-3).

5. Appareil de commande d'entraînement de moteur selon la revendication 3, dans lequel lorsque le circuit de détection de vitesse angulaire comprend un capteur de trou (48-1, 48-2, 48-3) en tant qu'élément constitutif, l'appareil de commande d'entraînement de moteur comprend :

un circuit de détection de vitesse angulaire pour calculer la vitesse angulaire mécanique $\omega$m du moteur (1) et une position d'un rotor (7) du moteur (1) ;

une section de commande vectorielle (100) pour commander de manière vectorielle en fonction de la vitesse angulaire $\omega$m du moteur (1) et la position de rotor calculée par le circuit de détection de vitesse angulaire ;

une section de commande par onde rectangulaire (45) pour commander par onde rectangulaire le moteur (1) ;

un commutateur (44) pour commuter les deux sections de commande (45, 100) ; et

un détecteur de niveau (42) ayant une vitesse angulaire déterminée qui devient la référence de détermination de la commutation du commutateur (44), et

la commande est réalisée en commutant le commutateur (44) de sorte que lorsque la vitesse angulaire mécanique $\omega$m calculée par le circuit de détection de vitesse angulaire est plus rapide que la vitesse angulaire déterminée, la section de commande par vecteur (100) commande, et

lorsque la vitesse angulaire mécanique $\omega$m est plus lente que la vitesse angulaire déterminée, la section de commande par onde rectangulaire (45) commande.

**6.** Appareil de commande d'entraînement de moteur selon l'une quelconque des revendications 1 à 5, dans lequel le moteur (1) est un moteur sans balai à courant continu ayant trois phases ou plus.

**7.** Appareil de commande d'entraînement de moteur selon l'une quelconque des revendications 1 à 6, dans lequel la forme d'onde de courant ou la forme d'onde de contre-tension du moteur sans balai à courant continu (1) est une onde rectangulaire ou une pseudo onde rectangulaire.

**8.** Appareil de direction assistée électrique utilisant l'appareil de commande d'entraînement de moteur selon l'une quelconque des revendications 1 à 7.

FIG.1

FIG.2

M

INVERTER  31

PWM CONTROL SECTION  30

PI CONTROL SECTION  21

20-1

20-2

20-3

Iavref
Ibvref
Icvref

2 PHASE/3 PHASE CONVERSION SECTION  104

q AXIS COMMAND CURRENT CALCULATION SECTION  108

Idref=0

Iqref

3 PHASE/2 PHASE CONVERSION SECTION  102

ed

eq

LEAD ANGLE CALCULATION SECTION  107

Φ

CONVERSION SECTION  101

ea
eb
ec

CONVERSION SECTION  106

ωb

θe

ωe

200

CURRENT COMMAND VALUE

DIFFERENTIATION CIRCUIT  24

θe

ωe

Tref

Tref

Ia
Ib
Ic

32-1
32-2
32-3

1

11

# FIG.3

# FIG.4

EP 1 583 217 B1

# FIG.5

EP 1 583 217 B1

FIG.6

**FIG.7**

# FIG.8

# FIG.9

EMF
(A)

Id=0 [A]
(B)

Id=10 [A]
(C)

FIG.10

# FIG.11

**105**

**d AXIS COMMAND CURRENT CALCULATION SECTION**

$\phi = acos(\alpha \times \omega b / \omega m)$

Tref → **106** CONVERSION SECTION → $\omega b$ → **105g** MULTIPLIER $\times \alpha$ → $\alpha \cdot \omega b$ → **105b** acos CALCULATION SECTION → $\phi$ → **105c** sin CALCULATION SECTION → $\sin \phi$

$\omega m = \omega e / p$

$\omega e$ → **105a** MECHANICAL ANGLE CALCULATION SECTION → $\omega m$

**105d** TORQUE COEFFICIENT SECTION → Iqb → **105e** ABSOLUTE VALUE SECTION → | Iqb | → **105f** MULTIPLIER $\times$ (-1) → Idref= - | Iqb | sin Φ

Iqb = (Tref / Kt)

EP 1 583 217 B1

# FIG.12

n (rpm)

(ωe (rad/s))

WHEREIN
ωe=P*2πn/60

PVC CONTROL
(WITH FIELD WEAKENING CONTROL)

MOTOR CHARACTERISTICS(ωb)
BOUNDARY A

FIELD WEAKENING CONTROL
MOTOR CHARACTERISTICS
(α × ωb)
BOUNDARY B

PVC CONTROL
(NO FIELD WEAKENING
CONTROL)

BOUNDARY C1    BOUNDARY C2

N1=650rpm

N2=500rpm

T (N*m)

RECTANGULAR WAVE CONTROL

EP 1 583 217 B1

FIG.13

EP 1 583 217 B1

# FIG.14

n (rpm)

(ωe (rad/s))

WHEREIN
ωe=P*2πn/60

PVC CONTROL
(WITH FIELD WEAKENING
CONTROL)

MOTOR CHARACTERISTICS(ωb)
BOUNDARY A

FIELD WEAKENING CONTROL
MOTOR CHARACTERISTICS
(α × ωb)
BOUNDARY B

PVC CONTROL
(NO FIELD WEAKENING
CONTROL)

T (N*m)

EP 1 583 217 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001018822 A
- JP 2001187578 A
- JP 2002272163 A
- JP 2002369569 A
- JP 2001168151 A
- JP 2003376428 A